(19) **Europäisches Patentamt**
**European Patent Office**
**Office européen des brevets**

(11) **EP 4 265 476 A1**

(12) **EUROPEAN PATENT APPLICATION**
published in accordance with Art. 153(4) EPC

(43) Date of publication:
**25.10.2023 Bulletin 2023/43**

(21) Application number: **21906664.4**

(22) Date of filing: **15.12.2021**

(51) International Patent Classification (IPC):
**B60Q 1/04** (2006.01)   **B60Q 1/14** (2006.01)
**F21V 23/00** (2015.01)   **F21Y 115/10** (2016.01)
**F21Y 115/30** (2016.01)   **F21V 14/04** (2006.01)
**F21S 41/151** (2018.01)   **F21S 41/16** (2018.01)
**F21S 41/675** (2018.01)   **F21W 102/14** (2018.01)
**H05B 47/105** (2020.01)   **H05B 47/125** (2020.01)
**H05B 47/155** (2020.01)   **H05B 47/165** (2020.01)
**H05B 47/17** (2020.01)   **H05B 47/175** (2020.01)
**H05B 45/10** (2020.01)   **H05B 45/33** (2020.01)
**H05B 45/375** (2020.01)

(52) Cooperative Patent Classification (CPC):
**B60Q 1/04; B60Q 1/14; F21S 41/151; F21S 41/16;**
**F21S 41/675; F21V 14/04; F21V 23/00;**
**H05B 45/10; H05B 45/33; H05B 45/375;**
**H05B 47/105; H05B 47/125; H05B 47/155;**
**H05B 47/165; H05B 47/17;**          (Cont.)

(86) International application number:
**PCT/JP2021/046328**

(87) International publication number:
**WO 2022/131303 (23.06.2022 Gazette 2022/25)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.12.2020 JP 2020210707**

(71) Applicant: **KOITO MANUFACTURING CO., LTD.**
**Minato-ku**
**Tokyo 108-8711 (JP)**

(72) Inventors:
• **KAMIYA Misako**
**Shizuoka-shi Shizuoka 424-8764 (JP)**
• **OYAMA Sanae**
**Shizuoka-shi Shizuoka 424-8764 (JP)**

(74) Representative: **Algemeen Octrooi- en**
**Merkenbureau B.V.**
**P.O. Box 645**
**5600 AP Eindhoven (NL)**

(54) **VEHICLE LAMP AND ILLUMINATION METHOD**

(57)     A scanning light source 200A includes a semiconductor light source 212, and scans an instantaneous illumination spot SPT based on the output light of the semiconductor light source 212 in the horizontal direction of the light distribution. A lighting circuit 300J is capable of providing multi-gradation dimming of the amount of light provided by the semiconductor light source 212 at each scanning position in synchronization with the scanning of the scanning light source 200A. The lighting circuit 300J is switchable between the first mode in which the semiconductor light source 212 is controlled by pulse width modulation with a duty cycle that corresponds to the dimming ratio and the second mode in which the semiconductor light source 212 is turned off over the number of cycles that corresponds to the dimming ratio.

EP 4 265 476 A1

FIG. 14

(52) Cooperative Patent Classification (CPC): (Cont.)
**H05B 47/175;** F21W 2102/14; F21Y 2115/10;
F21Y 2115/30; Y02B 20/40

**Description**

[TECHNICAL FIELD]

The present disclosure relates to an automotive lamp.

[BACKGROUND ART]

Typical automotive lamps are capable of switching between a low-beam mode and a high-beam mode. The low-beam mode is used to illuminate a close range in the vicinity of the user's vehicle with a predetermined light intensity. In the low-beam mode, light distribution is determined so as to prevent glare being imparted to an oncoming vehicle or a leading vehicle. The low-beam mode is mainly used when the vehicle is traveling in an urban area. In contrast, the high-beam mode is used to illuminate a distant range over a wide area ahead of the vehicle with a relatively high light intensity. The high-beam mode is mainly used when the vehicle is traveling at high speed along a road where there are a small number of oncoming vehicles and leading vehicles. Accordingly, the high-beam mode provides the driver with high visibility, which is an advantage, as compared with the low-beam mode. However, the high-beam mode has a problem of imparting glare to a pedestrian or a driver of a vehicle ahead of the vehicle.

In recent years, the Adaptive Driving Beam (ADB) technique, in which a high-beam distribution pattern is dynamically and adaptively controlled based on the state of the surroundings of a vehicle, has been put to practical use. With the ADB technique, the presence or absence of a leading vehicle, an oncoming vehicle, or a pedestrian in front of the vehicle is detected, and the illumination is reduced or the like for a region that corresponds to such a vehicle, thereby reducing glare imparted to such a vehicle.

As a method for providing the ADB function, various methods have been proposed, such as a shutter method in which an actuator is controlled, a rotary method, an LED array method, and so forth. With the shutter method or the rotary method, this allows a lighting-off region (shielded region) to have a continuously variable width. However, the number of lighting-off regions is limited to one. The LED array method allows multiple lighting-off regions to be designed. However, the width of each lighting-off region is limited depending on the illumination width of each LED chip. Thus, the LED array method leads to discrete lighting-off regions, which is a problem.

As an ADB method that allows these problems to be solved, the present applicant has proposed a scanning method (see Patent documents 2 and 3). In the scanning method, light is input to a rotated reflector (blade mirrors), and the input light is reflected with an angle that corresponds to the rotational position of the reflector. Furthermore, the lighting on/off of a light source is changed according to the rotational position of the reflector while scanning the reflected light to a forward region in front of the vehicle, so as to form a desired light distribution pattern in front of the vehicle.

In the scanning method described in Patent document 3, the lighting of the light source is switched between on state and off state (on and off) in a time sharing manner for each scanning while maintaining the amount of current that flows through the light source. This allows a glare-free function, i.e., a function of shielding a predetermined area, to be provided in a simple manner. However, the light intensity for the illuminated region is limited to a substantially constant value.

A specific light distribution forming method using a scanning automotive lamp is disclosed in Patent document 4. In this technique, a light distribution is formed using multiple channels of light sources. The multiple channels of light sources each assigned to a part of the region in the horizontal direction. The scanning region of each light source is scanned such that it is shifted in the horizontal direction with a part thereof overlapping the scanning region of a different light source. The light amount of each light source is controlled by so-called DC dimming (analog dimming), which has a limitation due to the response speed. Accordingly, each light source provides a variable light amount that can be controlled in units of scanning. With this lamp, the light intensity at each scanning position can be controlled by adjusting a combination of the turn-on states, turn-off states, and light amounts of the multiple light sources, thereby allowing various kinds of light distribution patterns to be provided (e.g., electronic swivel function) other than a glare-free function.

[Related Art Documents]

[Patent Documents]

[Patent document 1]
Japanese Patent Application Laid Open No. 2008-205357
[Patent document 2]
Japanese Patent Application Laid Open No. 2012-224317

[Patent document 3]
Japanese Patent Application Laid Open No. 2010-6109
[Patent document 4]
Japanese Patent Application Laid Open No. 2018-187979

[DISCLOSURE OF THE INVENTION]

[PROBLEM TO BE SOLVED BY THE INVENTION]

With the technique disclosed in Patent document 4, in order to form a single light distribution, this requires many channels of light sources and lighting circuits. This requires a complicated configuration and complicated control of light sources in order to form a desired light distribution.

The present disclosure has been made in order to solve such a problem. Accordingly, it is an exemplary purpose of an embodiment of the present disclosure to provide an automotive lamp that is capable of generating various kinds of light distribution patterns other than a glare-free function.

[MEANS TO SOLVE THE PROBLEM]

An embodiment of the present disclosure relates to an automotive lamp. The automotive lamp includes: a scanning light source including a semiconductor light source, and structured to scan an instantaneous illumination spot based on an output light of the semiconductor light source in a horizontal direction; and a lighting circuit structured to provide multi-gradation dimming of the amount of light of the semiconductor light source at each scanning position in synchronization with scanning of the scanning light source. The lighting circuit is switchable between a first mode in which the semiconductor light source is controlled by pulse width modulation with a duty cycle that corresponds to a dimming ratio and a second mode in which the semiconductor light source is turned off over the number of cycles that corresponds to the dimming ratio.

Another embodiment of the present disclosure relates to an illumination method. The illumination method includes: scanning an instantaneous illumination spot based on an output light of a semiconductor light source in the horizontal direction of a light distribution; and providing multi-gradation dimming of the amount of light of the semiconductor light source at each scanning position in synchronization with scanning of the instantaneous illumination spot. The dimming includes: turning on the semiconductor light source by pulse width modulation with a duty cycle that corresponds to a dimming ratio in a case in which a dimmed region has a width that is wider than a predetermined value; and turning off the semiconductor light source over a number of cycles that corresponds to the dimming ratio in a case in which a dimmed region has a width that is narrower than the predetermined value.

It should be noted that any combination of the components described above is effective as an embodiment of the present invention or the present disclosure. Also, any component or manifestation of the present invention or the present disclosure may be mutually substituted between a method, apparatus, system, and so forth, which is also effective as an embodiment of the present invention or the present disclosure. The description of the items (means for solving the problems) is by no means intended to describe all the indispensable features of the present invention. That is to say, any subcombination of the features as described above is also encompassed in the technical scope of the present invention.

[ADVANTAGE OF THE PRESENT INVENTION]

With an embodiment of the present disclosure, this allows a scanning automotive lamp to generate various kinds of light distribution patterns other than a glare-free function.

[BRIEF DESCRIPTION OF THE DRAWINGS]

Fig. 1 is a diagram showing an automotive lamp according to an embodiment 1;
Figs. 2A and 2B are diagrams for explaining the formation of glare-free light distribution by an automotive lamp;
Figs. 3A and 3B are diagrams for explaining the formation of a partially dimmed light distribution provided by an automotive lamp;
Figs. 4A and 4B are diagrams for explaining an electronic swivel function provided by an automotive lamp;
Fig. 5 is a diagram showing an automotive lamp according to a comparison technique;
Fig. 6 is a diagram for explaining the formation of light distribution provided by an automotive lamp according to a comparison technique;

Fig. 7 is a block diagram showing an example configuration of a lighting circuit;

Fig. 8 is a circuit diagram showing an example configuration of an LED driver;

Fig. 9 is a circuit diagram showing another example configuration of an LED driver;

Fig. 10 is a circuit diagram showing yet another example configuration of an LED driver;

Fig. 11 is a diagram showing an automotive lamp according to an embodiment 2;

Fig. 12 is a block diagram showing an example configuration of a lighting circuit shown in Fig. 11;

Figs. 13A and 13B are diagrams each showing a light distribution pattern including a dimmed region provided by PWM dimming;

Fig. 14 is a block diagram of an automotive lamp according to an embodiment 3;

Fig. 15 is a diagram for explaining the operation of the cycle number control (second mode) of the automotive lamp shown in Fig. 14;

Fig. 16 is a diagram showing the light distribution formed by the cycle number control of the automotive lamp shown in Fig. 14;

Fig. 17 is a diagram showing the relation between the number of off cycles and the light distribution pattern in the cycle number control; and

Figs. 18A through 18C are diagrams each showing the light distribution provided by the cycle number control and the light distribution provided by the PWM control.

[BEST MODE FOR CARRYING OUT THE INVENTION]

OUTLINE OF EMBODIMENTS

Description will be made regarding the outline of several exemplary embodiments of the present disclosure. The outline is a simplified explanation regarding several concepts of one or multiple embodiments as a prelude to the detailed description described later in order to provide a basic understanding of the embodiments. That is to say, the outline described below is by no means intended to restrict the scope of the present invention and the present disclosure. Furthermore, the outline described below is by no means a comprehensive outline of all the possible embodiments. That is to say, the outline described below by no means restricts essential components of the embodiments. For convenience, in some cases, an "embodiment" as used in the present specification represents a single or multiple embodiments (examples and modifications) disclosed in the present specification.

An automotive lamp according to one embodiment includes: a scanning light source including a semiconductor light source, and structured to scan an instantaneous illumination spot based on an output light of the semiconductor light source in the horizontal direction; and a lighting circuit structured to provide multi-gradation dimming of the amount of light of the semiconductor light source at each scanning position in synchronization with scanning of the scanning light source. The lighting circuit is switchable between a first mode in which the semiconductor light source is controlled by pulse width modulation with a duty cycle that corresponds to a dimming ratio and a second mode in which the semiconductor light source is turned off over the number of cycles that corresponds to the dimming ratio.

With this arrangement employing the pulse width modulation, this is capable of changing the amount of light of the light source at high speed in each scanning cycle according to the scanning position. In addition to the shielded portion, such an arrangement is capable of forming a dimmed portion. Accordingly, this allows the variations of light distribution that can be formed using a single light source to be increased as compared with DC dimming (analog dimming) in which a constant amount of light is provided in each scanning cycle. This allows the number of light sources and the number of lighting circuits to be reduced as compared with conventional arrangements. Alternatively, this allows the control to be designed in a simple manner.

In a case of employing the scanning and PWM dimming together, such an arrangement generates a region (which will be referred to as a "transition region" hereafter) in which the light intensity gradually changes as a boundary region between a dimmed portion and an undimmed portion. As the width of the dimmed portion becomes narrower, the ratio of the transition region becomes larger with respect to the dimmed portion, leading to degradation of effective resolution. Furthermore, in a case in which the instantaneous illumination spot has a light intensity distribution that is rectangular or similar to rectangular in the horizontal direction, the light intensity changes in a stepwise manner in the transition region. In this case, by selecting the second mode, such an arrangement is capable of narrowing the width of the transition region, and is capable of continuously changing the light intensity of the transition region.

In one embodiment, in addition to the semiconductor light source, the scanning light source may further include a reflector structured to receive the output light of the semiconductor light source and to repeat a predetermined periodic motion so as to scan a reflected light of the output light in front of a vehicle. The lighting circuit may generate a control waveform for pulse width modulation in synchronization with the motion of the reflector, and switches on and off a driving current to be supplied to the semiconductor light source according to the control waveform.

In one embodiment, the lighting circuit may include a series switch provided in series with the semiconductor light source and a constant current driver coupled to a series connection circuit of the series switch and the semiconductor light source. The lighting circuit may switch on and off the series switch with a duty cycle that corresponds to the scanning position.

A conventional technique (Patent document 4) employs a configuration in which two semiconductor light sources are coupled in series, and a bypass switch is provided in parallel with each semiconductor light source. With this arrangement, in a case in which one bypass switch is switched on and off at a frequency that is sufficiently higher than the scanning frequency, this has an effect on the other semiconductor light source. In contrast, with an arrangement in which each semiconductor light source is separately driven by means of the corresponding series switch, this is capable of eliminating the effects of the driving of a given channel on the other channels.

In one embodiment, the constant current driver may include a switching converter and a converter controller configured to drive the switching converter such that the detection value of the output current of the switching converter approaches a predetermined target value.

EMBODIMENTS

Description will be made below regarding the present disclosure with reference to the drawings. In each drawing, the same or similar components, members, and processes are denoted by the same reference numerals, and redundant description thereof will be omitted as appropriate. The embodiments have been described for exemplary purposes only, and are by no means intended to restrict the present disclosure. Also, it is not necessarily essential for the present disclosure that all the features or a combination thereof be provided as described in the embodiments.

In the present specification, the state represented by the phrase "the member A is coupled to the member B" includes a state in which the member A is indirectly coupled to the member B via another member that does not substantially affect the electric connection between them, or that does not damage the functions or effects of the connection between them, in addition to a state in which they are physically and directly coupled.

Similarly, the state represented by the phrase "the member C is provided between the member A and the member B" includes a state in which the member A is indirectly coupled to the member C, or the member B is indirectly coupled to the member C via another member that does not substantially affect the electric connection between them, or that does not damage the functions or effects of the connection between them, in addition to a state in which they are directly coupled.

In the present specification, the reference symbols denoting electric signals such as a voltage signal, current signal, or the like, and the reference symbols denoting circuit elements such as a resistor, capacitor, or the like, also represent the corresponding voltage value, current value, resistance value, or capacitance value as necessary.

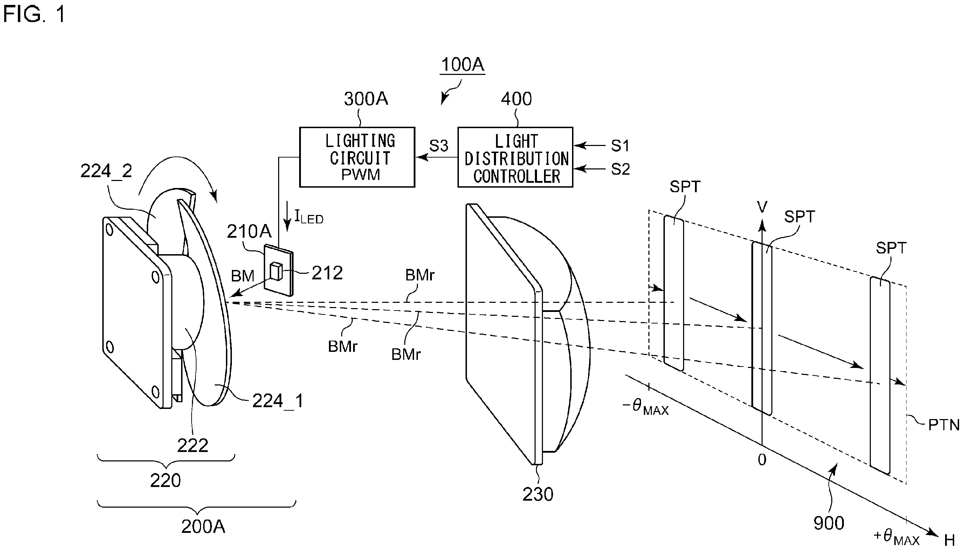

Fig. 1 is a diagram showing an automotive lamp 100A according to an embodiment 1. The automotive lamp 100A shown in Fig. 1 has an ADB function employing a scanning method, and forms various kinds of light distribution patterns in front of the vehicle. The automotive lamp 100A mainly includes a scanning light source 200A, a lighting circuit 300A, and a light distribution controller 400.

The light distribution controller 400 receives information (sensor information) S1 from a sensor such as a camera, LiDAR (Light Detection and Ranging, Laser Imaging Detection and Ranging), or the like, and information (vehicle information) S2 such as the vehicle speed, steering angle, etc., and determines the light distribution pattern. The light distribution controller 400 may be housed in a lamp body, or may be provided on the vehicle side. The light distribution controller 400 transmits information (light distribution pattern information) S3 to the automotive lamp 100 for indicating the light distribution pattern. The light distribution controller 400 is also referred to as an ADB Electronic Control Unit (ECU).

The scanning light source 200A includes a light source unit 210A, a scanning optical system 220, and a projection optical system 230. The light source unit 210A includes a single semiconductor light source 212, an unshown heatsink, and the like. As the semiconductor light source 212, a light-emitting diode (LED), laser diode, or the like, may be employed. The scanning optical system 220 scans the output light (beam) BM of the semiconductor light source 212 in front of the vehicle.

In the present embodiment, the scanning optical system 220 includes a motor 222 and one or M multiple (two in this example) blade mirrors 224_1 and 224_2. The M (M ≥ 2) blade mirrors are mounted at positions with an offset of 360/M degrees. In this example, the two blade mirrors are mounted at positions with an offset of 180 degrees.

The semiconductor light source 212 is arranged with its optical axis extending in a direction such that the output beam BM is emitted to one from among the M blade mirrors.

At a given time point, the incident beam BM input to the blade mirrors 224 is reflected at a reflection angle that corresponds to the position (rotational angle of a rotor) of the blade mirrors 224, and forms an instantaneous illumination spot SPT on a virtual vertical screen 900 in front of the vehicle. The instantaneous illumination spot SPT has a width Δv in the horizontal direction (H direction) and a width Δh in the vertical direction (V direction). The blade mirrors 224 are rotated so as to change the reflection angle, i.e., the output direction of the reflected beam BMr, thereby moving the position (scanning position) of the instantaneous illumination spot SPT in the horizontal direction (H direction). By repeating this operation at high speed, e.g., at 500 Hz or more, this forms a light distribution pattern PTN.

In the present embodiment, the light distribution pattern PTN formed by a single beam BM extends over the entire range, i.e., over a range of $-\theta_{MAX}$ to $+\theta_{MAX}$, of the automotive lamp 100A in the horizontal direction. That is to say, the scanning light source 200A scans the reflected beam BMr over the entire range in the horizontal direction. For example, $\theta_{MAX}$ is on the order of 20 to 25 degrees. It should be noted that the entire range represents the entire range in which the beam can be scanned. That is to say, the entire range does not include a range illuminated by a light source that differs from the scanning light source.

The lighting circuit 300A provides multi-gradation dimming of the light amount of the semiconductor light source 212, i.e., the light intensity of the beam BM, at each scanning position by pulse dimming in synchronization with the scanning of the scanning light source 200A so as to provide a light distribution pattern indicated by light distribution pattern information S3. In the present embodiment, the average amount of the driving current $I_{LED}$ that flows through the semiconductor light source 212 is changed by pulse width modulation (PWM) so as to change the light amount of the semiconductor light source 212 (PWM dimming). The PWM frequency is determined such that it is sufficiently higher than the scanning frequency. For example, the PWM frequency is preferably several kHz to several hundred kHz.

It should be noted that the lighting circuit 300A may change the current amount of the current $I_{OUT}$ with a control cycle that is equal to or longer than the scanning cycle. That is to say, the lighting circuit 300A may employ the PWM dimming and DC dimming together. The above is the configuration of the automotive lamp 100A. Next, description will be made regarding the operation thereof.

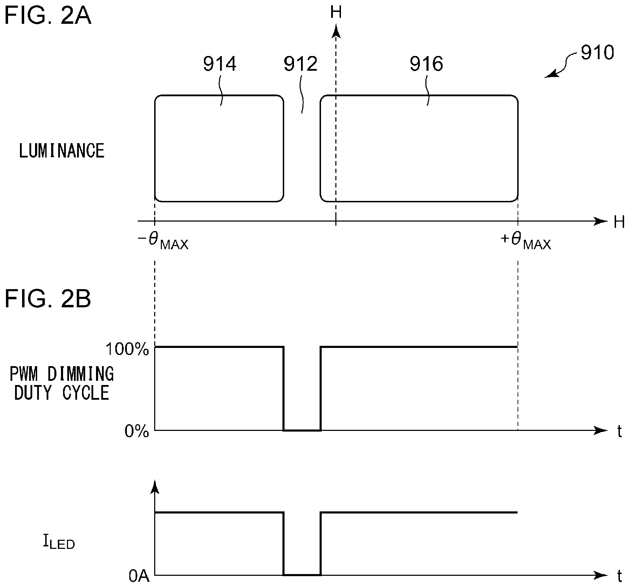

Figs. 2A and 2B are diagrams for explaining the formation of the glare-free light distribution provided by the automotive lamp 100A. A glare-free light distribution 910 shown in Fig. 2 includes a shielded portion 912 and illuminated portions 914 and 916. Fig. 2A shows the light distribution on a virtual vertical screen. Fig. 2B shows the operation waveform of the automotive lamp 100A that corresponds to the light distribution shown in Fig. 2A. It should be noted that, in the present specification, the vertical axis and the horizontal axis shown in the waveform diagrams and the time charts to be used as a reference in the present specification are expanded or reduced as appropriate for ease of understanding. Also, each waveform shown in the drawing is simplified or exaggerated for emphasis for ease of understanding.

For example, in sections that correspond to the illuminated portions 914 and 916, the lighting circuit 300A supplies the driving current $I_{LED}$ to the semiconductor light source 212 with a duty cycle having a non-zero value (constant value of 100% in this example). On the other hand, in a section that corresponds to a shielded portion 912, the lighting circuit 300A supplies the driving current $I_{LED}$ with a duty cycle of 0%.

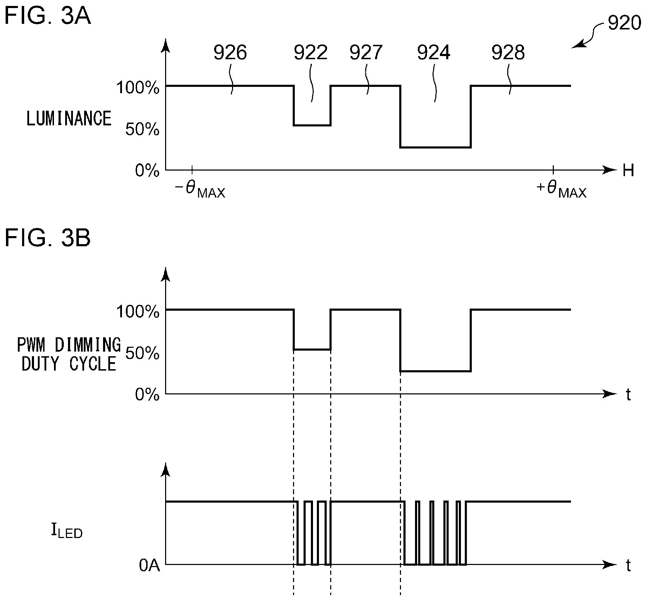

Figs. 3A and 3B are diagrams for explaining formation of a partially dimmed light distribution provided by the automotive lamp 100A. Fig. 3A shows the light intensity distribution in the horizontal direction on a virtual vertical screen. Fig. 3B shows the operation waveform of the automotive lamp 100A that corresponds to the light distribution shown in Fig. 3A. A partially dimmed light distribution 920 shown in Fig. 3A includes two shielded portions 922 and 924 and three undimmed portions 926, 927, and 928.

For example, in the sections that correspond to the undimmed portions (illuminated portions) 926, 927, and 928, the lighting circuit 300A fixes the duty cycle of the driving current $I_{LED}$ of the semiconductor light source 212 to 100%. Furthermore, in the sections that correspond to the dimmed portions 922 and 924, the lighting circuit 300A sets the duty cycle of the driving current $I_{LED}$ to 50% and 25%, respectively. With the automotive lamp 100A, the driving current $I_{LED}$ that flows through a single semiconductor light source is PWM controlled, thereby providing partial dimming.

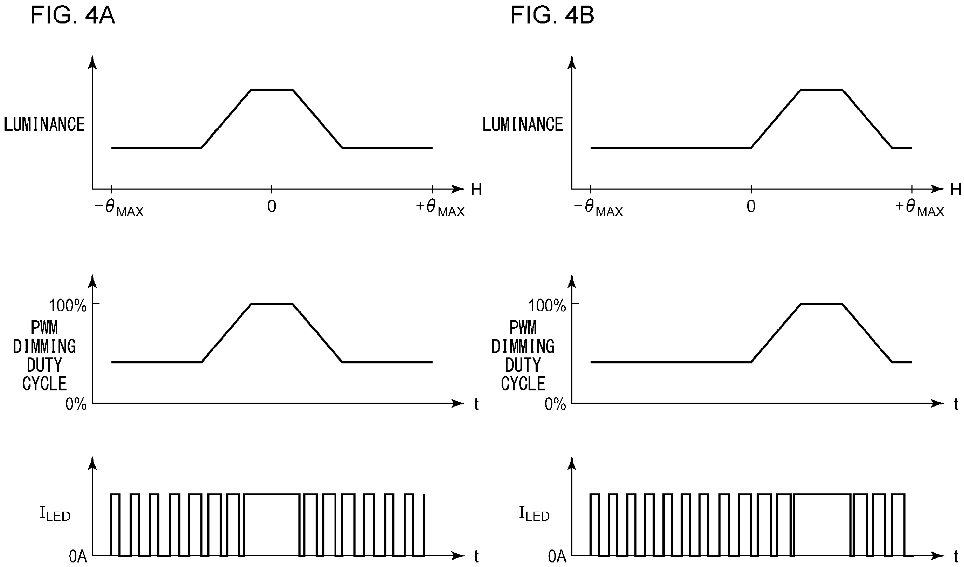

Figs. 4A and 4B are diagrams for explaining the electronic swivel function provided by the automotive lamp 100A. Fig. 4A shows a light distribution with a central portion having the highest brightness. Fig. 4B shows a light distribution with a right-side portion having the highest brightness. With the automotive lamp 100A in which the driving current $I_{LED}$ that flows through a single semiconductor light source is PWM controlled, this is capable of providing the electronic swivel function.

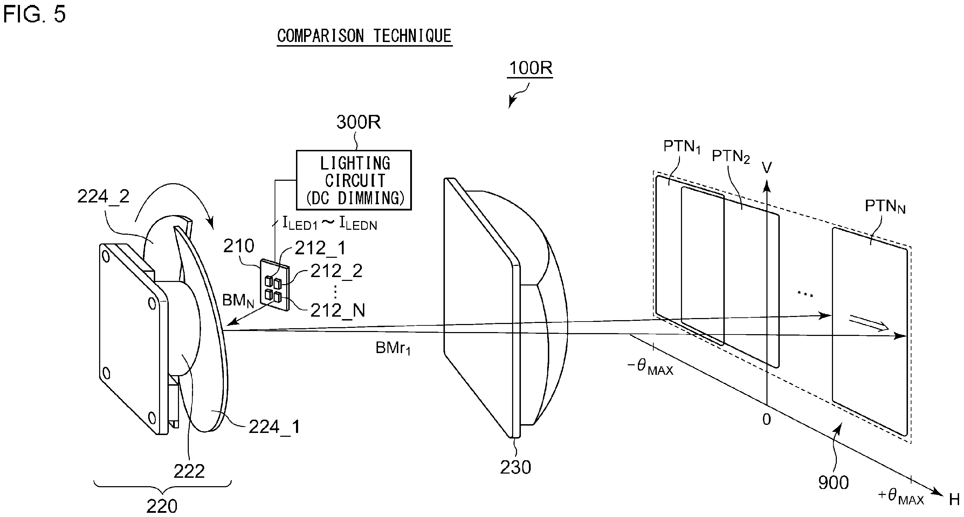

The above is the operation of the automotive lamp 100A. The advantages of the automotive lamp 100A can be more clearly understood based on a comparison with a comparison technique. Accordingly, description will be made regarding a comparison technique. Fig. 5 is a diagram showing an automotive lamp 100R according to a comparison technique.

In the automotive lamp 100R according to the comparison technique, a light source unit 210R includes multiple semiconductor light sources 212_1 through 212_N. The output beams $BM_1$ through $BM_N$ of the respective semiconductor light sources 212_1 through 212_N are scanned in different ranges in the horizontal direction on the virtual vertical screen 900 so as to form multiple individual light distribution patterns $PTN_1$ through $PTN_N$. The light distribution formed by the automotive lamp 100R is generated as a superimposition of the multiple individual light distribution patterns $PTN_1$ through $PTN_N$.

The lighting circuit 300R supplies driving currents $I_{LED1}$ through $I_{LEDN}$ to the multiple semiconductor light sources 212_1 through 212_N, respectively. The lighting circuit 300R is capable of turning on and off the driving currents $I_{LED1}$

through $I_{LEDN}$ in each cycle. Furthermore, the lighting circuit 300R is capable of controlling the amounts of current of the driving currents $I_{LED1}$ through $I_{LEDN}$ in the on period by DC dimming.

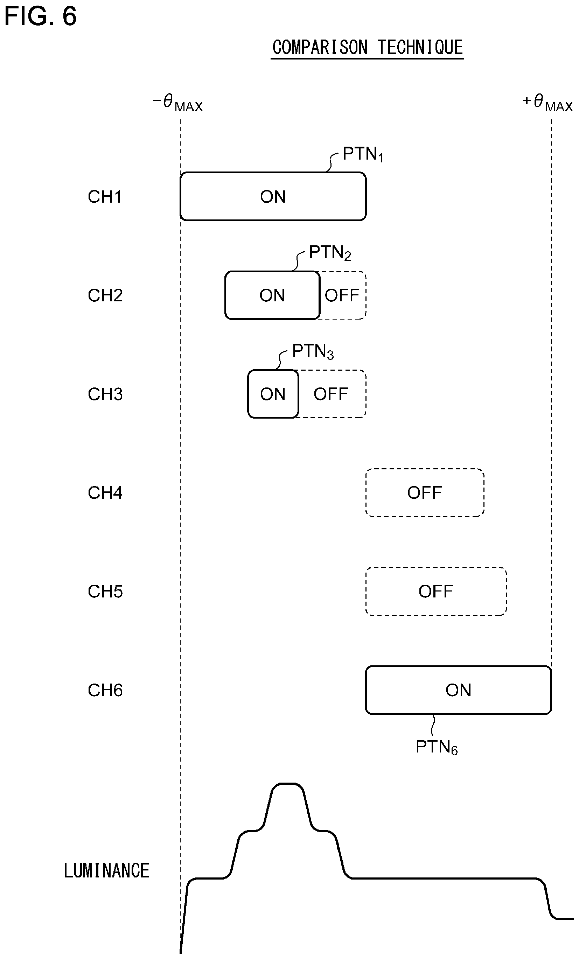

Fig. 6 is a diagram for explaining the formation of light distribution provided by the automotive lamp 100R according to the comparison technique. Description will be made below regarding an arrangement in which N = 6 channels. The illumination widths of the multiple individual light distribution patterns $PTN_1$ through $PTN_6$ are controlled. By superimposing the multiple individual light distribution patterns $PTN_1$ through $PTN_6$, in this example, a light distribution pattern is formed with a left-front portion having a high brightness.

Description will be made returning to the embodiment 1. With the automotive lamp 100A according to the embodiment 1 employing pulse dimming, this is capable of changing the amount of light provided by the light source at high speed according to a scanning position in each scanning cycle. Accordingly, as compared with conventional analog dimming that provides a constant amount of light in each scanning cycle, such an arrangement is capable of providing an increased number of variations of light distribution that can be formed by means of a single light source. Alternatively, this allows the control to be designed in a simple manner.

The present disclosure encompasses various kinds of apparatuses and circuits that can be regarded as a block configuration or a circuit configuration shown in Figs. 3 and 4, or otherwise that can be derived from the aforementioned description. That is to say, the present disclosure is not restricted to a specific configuration. More specific description will be made below regarding example configurations for clarification and ease of understanding of the essence of the present disclosure and the circuit operation. That is to say, the following description will by no means be intended to restrict the technical scope of the present disclosure.

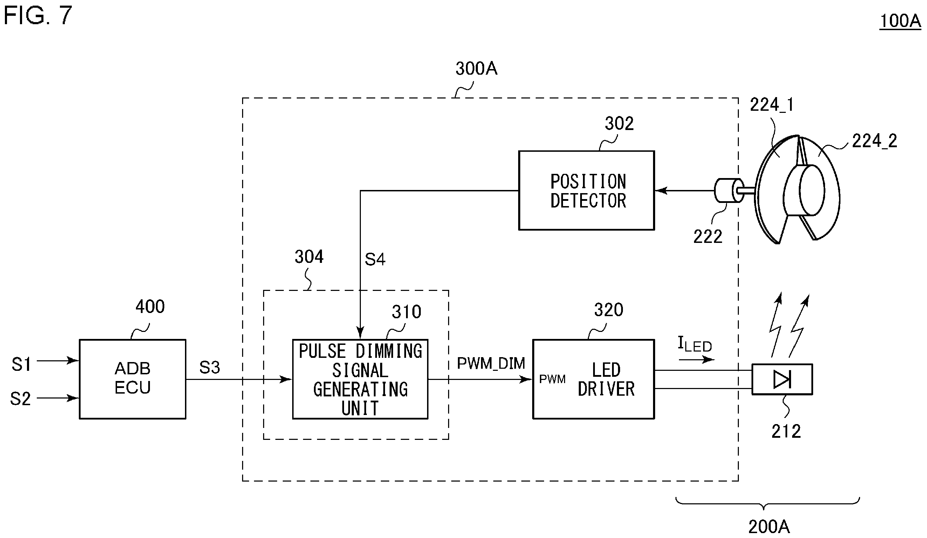

Specific description will be made regarding an example configuration of the lighting circuit 300A. Fig. 7 is a block diagram showing an example configuration of the lighting circuit 300A.

The light distribution controller 400 receives sensor information S1 and vehicle information S2. The light distribution controller 400 detects a situation in front of the vehicle based on the sensor information S1. Specifically, the light distribution controller 400 detects the presence or absence of an oncoming vehicle or a leading vehicle, the presence or absence of a pedestrian, etc. Furthermore, the light distribution controller 400 detects the current vehicle speed, steering angle, etc., based on the vehicle information S2. The light distribution controller 400 determines the light distribution pattern to be emitted in front of the vehicle based on the information described above. The light distribution controller 400 transmits information (light distribution pattern information) S3 to the lighting circuit 300A for indicating the light distribution pattern.

The lighting circuit 300A changes the amount of light (luminance) of the semiconductor light source 212 in a multi-gradation manner by PWM dimming based on the light distribution information S3 in synchronization with the rotation of the blade mirrors 224. For example, the lighting circuit 300A mainly includes a position detector 302, a PWM signal generating unit 310, and a constant current driver (which will be referred to as an "LED driver" hereafter) 320.

The position detector 302 is provided in order to detect the position of the blade mirrors 224, i.e., the current beam scanning position. The position detector 302 generates a position detection signal S4 that indicates a timing at which a predetermined reference portion of the blade mirrors 224 passes a predetermined position. For example, the reference portion may be defined by the ends of the two blade mirrors 224 (a gap between them). Also, the reference portion may be defined by the center of each blade. That is to say, a desired position may be used as the reference portion.

A Hall element may be mounted on the motor 222 that rotates the blade mirrors 224. In this case, a Hall signal output from the Hall element has a periodic waveform that corresponds to the rotor position, i.e., the positions of the blade mirrors. The position detector 302 may detect a timing at which the polarity of the Hall signal is inverted. Specifically, the position detector 302 may be configured as a Hall comparator that compares a pair of Hall signals.

The method for position detection of the blade mirrors 224 by means of the position detector 302 is not restricted to such an arrangement employing a Hall element. For example, the position detector 302 may generate the position detection signal S4 using an optical method for detecting the rotor position of the motor 222 or using a rotary encoder employing other methods. Also, the position detector 302 may include a photosensor provided on the back side of the blade mirrors 224 and a light source for position detection configured to emit light to the photosensor from the front-face side of the blade mirrors 224. Also, a slit or a pinhole may be provided in the blade mirrors 224. Such an arrangement is capable of detecting a timing at which the slit or the pinhole passes above the photosensor. The slit may be a gap between the two blade mirrors 224. Also, as the light source for position detection, an infrared light source may be employed. Also, the semiconductor light source 212 may be employed as the light source for position detection. As described above, various kinds of configurations may be employed for the position detector 302.

The PWM signal generating unit 310 generates a pulse dimming signal PWM_DIM in synchronization with the motion of the blade mirrors 224. The duty cycle of each scanning cycle of the pulse dimming signal PWM_DIM is determined based on the light distribution pattern. For example, in a case in which the rotational speed of the motor 222 is 6000 rpm (100 Hz) and two blade mirrors are provided, the scanning frequency is 100 Hz × 2 = 200 Hz, and accordingly, the scanning period is 5 ms. The PWM signal generating unit 310 may be provided as a combination of the microcontroller 304 and a software program or may be configured as a hardware component alone. The microcontroller 304 and the LED driver 320 may be mounted on a single substrate or may be arranged within a single housing.

The frequency of the pulse dimming signal PWM_DIM is determined to be higher than 200 Hz, e.g., may be in a range of several kHz to several dozen kHz. The duty cycle of the pulse dimming signal PWM_DIM determines the amount of light of the semiconductor light source 212. The duty cycle may be set for each PWM period. Also, the duty cycle may be set for every several PWM periods.

The LED driver 320 supplies the driving current $I_{LED}$ to the semiconductor light source 212. The amount of current of the driving current $I_{LED}$ is stabilized to a predetermined target value. The LED driver 320 switches on and off the driving current $I_{LED}$ according to the pulse dimming signal PWM_DIM.

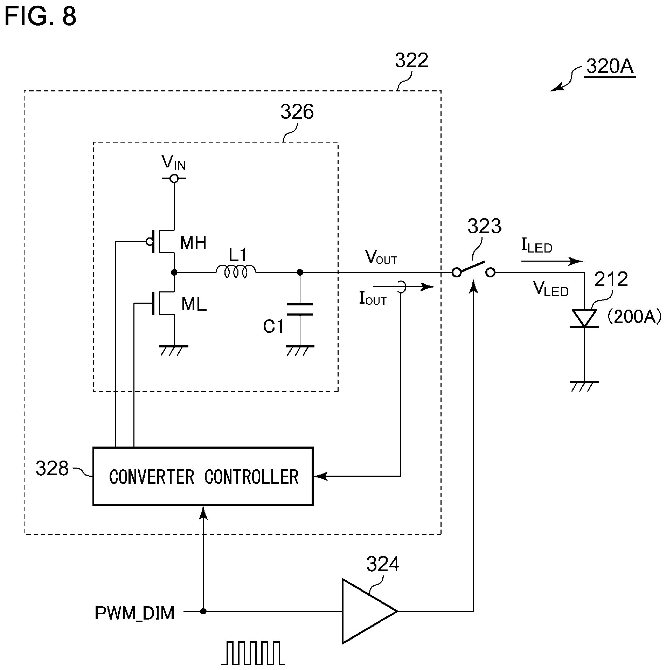

Fig. 8 is a circuit diagram showing an example configuration (320A) of the LED driver 320. The LED driver 320A includes a step-down converter 322, a series switch 323, and a driver circuit 324. The series switch 323 and the semiconductor light source 212 are coupled in series. In this example, the series switch 323 is inserted on the anode side of the semiconductor light source 212. Also, the series switch 323 may be inserted between the cathode of the semiconductor light source 212 and the ground.

The step-down converter 322 is configured as a constant current output switching converter and includes an output circuit 326 and a converter controller 328. The output circuit 326 includes a switching transistor MH, a synchronous rectification transistor ML, an inductor L1, and an output capacitor C1. The converter controller 328 controls the switching of the switching transistor MH and the synchronous rectification transistor ML of the output circuit 326 such that the output current $I_{OUT}$ of the step-down converter 322 approaches a predetermined target amount in an on period of the series switch 323.

The control method for the converter controller 328 is not restricted in particular. The converter controller 328 may be configured as an analog controller employing an error amplifier, a digital controller including a proportional-integral-differential (PID) compensator, or a controller employing a hysteresis control method.

The driver circuit 324 drives the series switch 323 according to the pulse dimming signal PWM_DIM. The driver circuit 324 may be integrated on the same IC as the converter controller 328.

When the pulse dimming signal PWM_DIM is at an off level that indicates the off state of the series switch 323, the converter controller 328 stops the switching of the switching transistor MH and the synchronous rectification transistor ML.

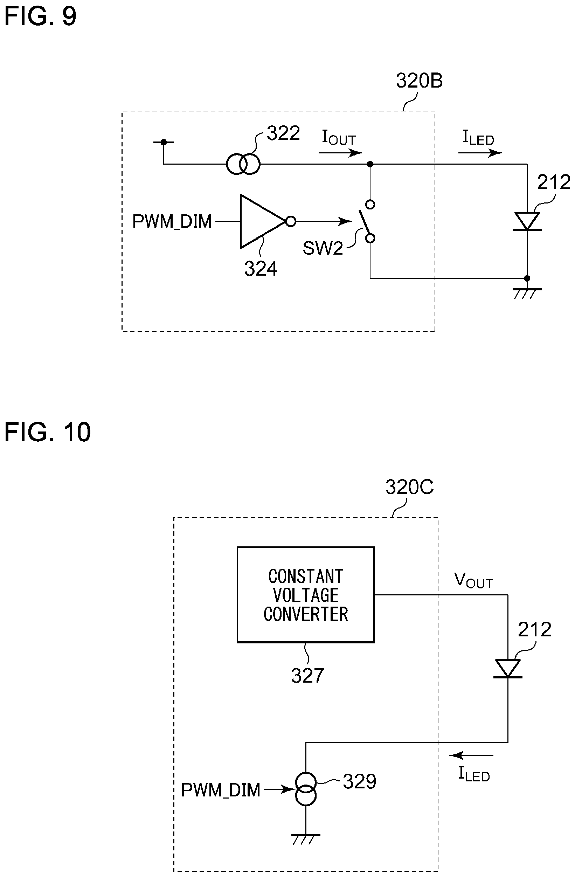

Fig. 9 is a circuit diagram showing another example configuration (320B) of the LED driver 320. The LED driver 320B includes a step-down converter 322, a bypass switch SW2, and a driver circuit 324. As with the configuration shown in Fig. 8, the step-down converter 322 may include the output switch 326 and the converter controller 328. The step-down converter 322 generates the output current $I_{OUT}$ stabilized to a predetermined target amount.

The bypass switch SW2 is coupled in parallel with the semiconductor light source 212. The driver circuit 324 drives the bypass switch SW2 according to the pulse dimming signal PWM_DIM. In the off period of the bypass switch SW2, the output current $I_{OUT}$ is supplied to the semiconductor light source 212 as the driving current $I_{LED}$. In the on period of the bypass switch SW2, the output current $I_{OUT}$ flows through the bypass switch SW2, which sets the driving current $I_{LED}$ to zero.

Fig. 10 is a circuit diagram showing yet another example configuration (320C) of the LED driver 320. The LED driver 320C includes a constant voltage converter 327 and a constant current source 329. The constant voltage converter 327 generates the output voltage $V_{OUT}$ stabilized to a predetermined voltage level. The constant current source 329 is coupled in series with the semiconductor light source 212. The constant current source 329 is switchable between on and off. In the on period, the constant current source 329 generates (sinks) the driving current $I_{LED}$ stabilized to a predetermined amount. The on and off of the constant current source 329 are controlled according to the pulse dimming signal PWM_DIM.

It should be noted that the configuration of the LED driver 320 is not restricted to such examples described above.

EMBODIEMNT 2

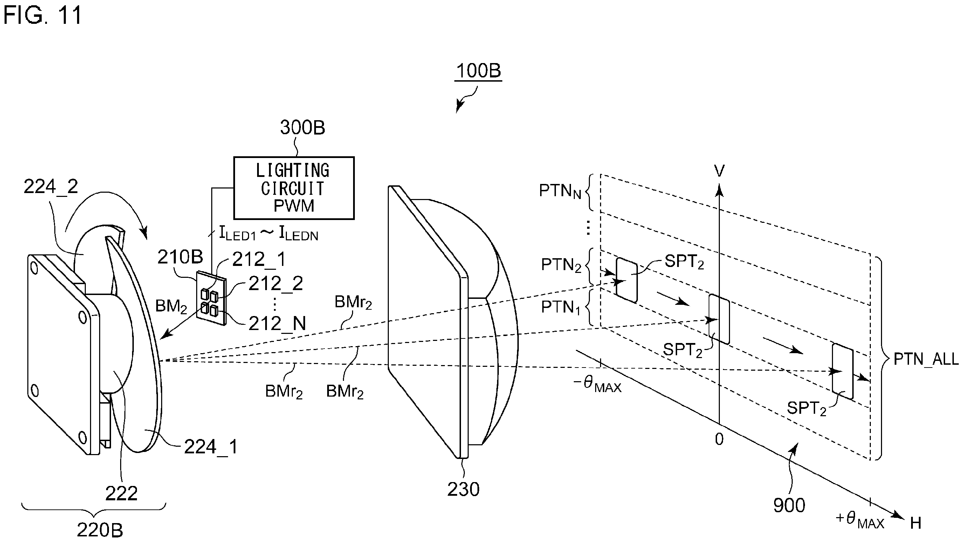

Fig. 11 is a diagram showing an automotive lamp 100B according to an embodiment 2. Description will be made regarding the points of difference from the embodiment 1.

A light source unit 210B of a scanning light source 200B includes N ($N \geq 2$) multiple semiconductor light sources 212_1 through 212_N. The semiconductor light sources 212_1 through 212_N are arranged with their optical axes extending such that the output beams $BM_1$ through $BM_N$ of the respective semiconductor light sources are emitted to one from among the M blade mirrors. Here, only the output beam $BM_2$ of the semiconductor light source 212_2 is shown as a representative.

At a given time point, the input beam $BM_2$ to the blade mirrors 224 is reflected at a reflection angle that corresponds to the position of the blade mirrors 224 (rotational angle of the rotor), which forms an instantaneous illumination spot $SPT_2$ on a virtual vertical screen 900 in front of the vehicle. The instantaneous illumination spot $SPT_2$ has a predetermined width in the horizontal direction (H direction) and a predetermined width in the vertical direction (V direction). The reflection angle changes according to the rotation of the blade mirrors 224. With this, as indicated by the broken line, the output direction of the reflected beam $BMr_2$ is changed, thereby moving the position (scanning position) of the instantaneous illumination spot $SPT_2$ in the horizontal direction (H direction). By repeating this operation at high speed, e.g., at 50 Hz or more, an individual light distribution pattern $PTN_2$ is formed in front of the vehicle.

The same can be said of the other beams $BM_1$ and $BM_3$ through $BM_N$. That is to say, by scanning the i-th reflected beam $BMr_i$, this forms an individual light distribution pattern $PTN_i$.

For example, the individual light distribution patterns $PTN_1$ through $PTN_N$ formed by the beams $BM_1$ through $BM_N$ are formed at different heights on the virtual vertical screen 900. By making a combination of the multiple individual light distribution patterns $PTN_1$ through $PTN_N$, an entire light distribution pattern PTN_ALL of the automotive lamp 100 is formed. The individual light distribution patterns adjacent to each other in the vertical direction may be arranged with a slight overlap in the vertical direction.

In the embodiment 2, at least one of the multiple individual light distribution patterns $PTN_1$ through $PTN_N$ extends in the entire range of $-\theta_{MAX}$ to $+\theta_{MAX}$ in the horizontal direction. That is to say, the scanning light source 200B scans at least one of the multiple beams $BMr_1$ through $BMr_N$ over the entire range in the horizontal direction. In an example shown in Fig. 11, all the individual light distribution patterns $PTN_1$ through $PTN_N$ each extend in the entire range of $-\theta_{MAX}$ to $+\theta_{MAX}$ in the horizontal direction.

A lighting circuit 300B dims the amount of light of each of the semiconductor light sources 212_1 through 212_N at each scanning position, i.e., the light intensity of the beams $BM_1$ through $BM_N$, by pulse modulation in a multi-gradation manner in synchronization with the scanning of the scanning light source 200B. The lighting circuit 300B may change the current amount of the current $I_{OUT}$ with a control cycle that is equal to or longer than the scanning cycle. That is to say, the lighting circuit 300B may employ the PWM dimming and DC dimming together.

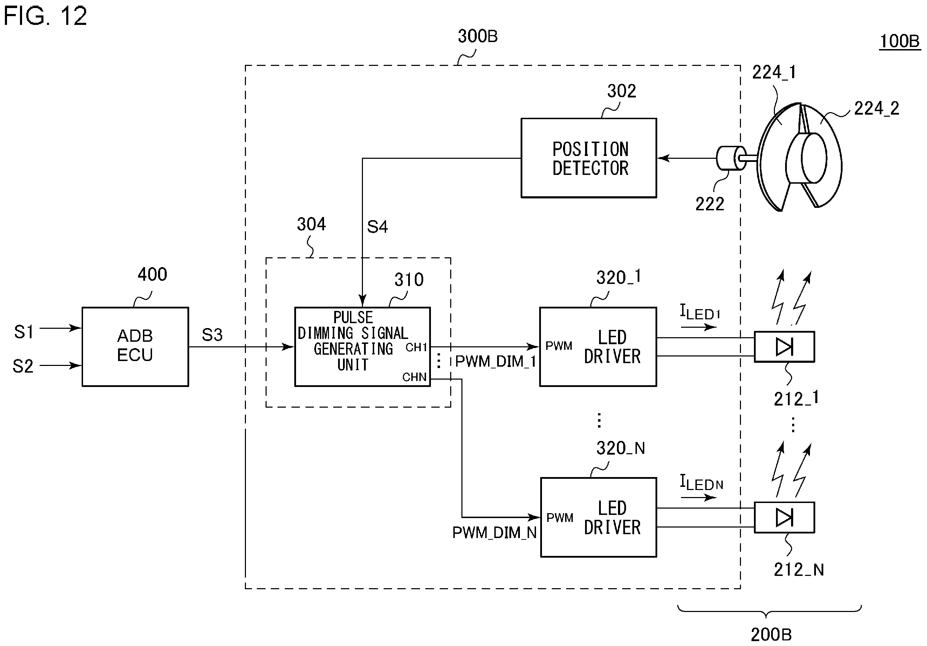

Fig. 12 is a block diagram showing an example configuration of the lighting circuit 300B shown in Fig. 11. The lighting circuit 300B includes multiple LED drivers 320_1 through 320_N that correspond to the multiple semiconductor light sources 212_1 through 212_N. The PWM signal generating unit 310 generates pulse dimming signals PWM_DIM_1 through PWM_DIM_N that correspond to the multiple LED drivers 320_1 through 320_N so as to provide a desired light distribution. The i-th ($1 \leq i \leq N$) LED driver 320 supplies a PWM modulated driving current $I_{LEDi}$ to the corresponding semiconductor light source 212_i. The LED driver 320 has the same configuration as that in the embodiment 1. The microcontroller 304 and the multiple LED drivers 320_1 through 320_N may be mounted on a single substrate or may be arranged within a single housing.

With the automotive lamp 100B, this provides improved resolution in the height direction as compared with the embodiment 1.

Description will be made regarding a modification of the embodiment 2. Description has been made above regarding an arrangement in which all the multiple light distribution patterns $PTN_1$ through $PTN_N$ extend over the entire range. However, the present invention is not restricted to such an arrangement. Also, several from among the multiple light distribution patterns $PTN_1$ through $PTN_N$ may be designed such that they extend over a part of the entire range instead of extending over the entire range.

Description has been made in the embodiment 2 regarding an arrangement in which the entire light distribution region is divided into multiple regions in the vertical direction, and the multiple individual light distribution patterns $PTN_1$ through $PTN_N$ are assigned to the multiple regions thus divided. However, the present invention is not restricted to such an arrangement. Several of the multiple individual light distribution patterns $PTN_1$ through $PTN_N$ may be arranged such that they completely overlap.

EMBODIMENT 3

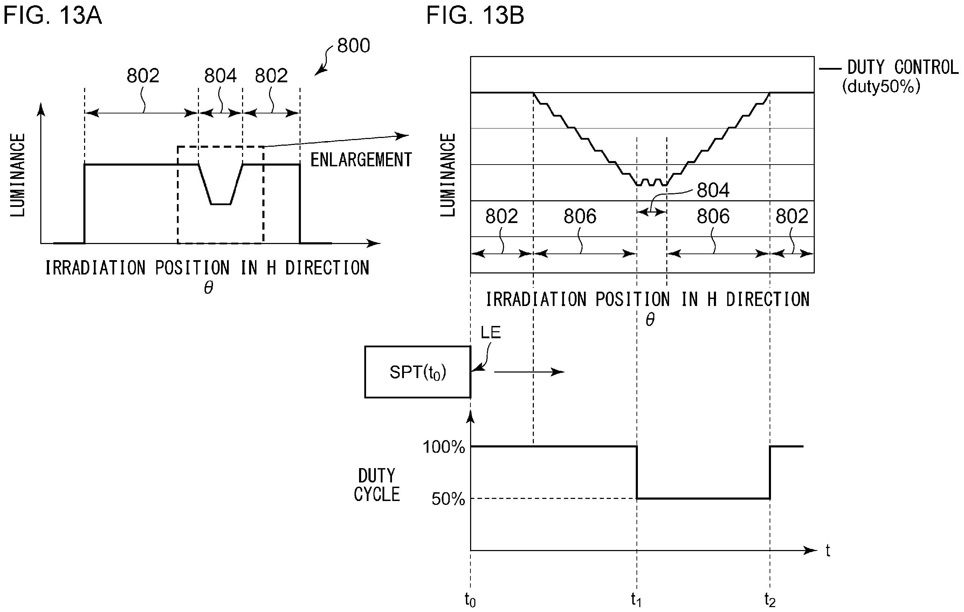

Figs. 13A and 13B are diagrams each showing a light distribution pattern including a dimmed region provided by the PWM dimming. Here, the vertical axis represents the light intensity, and the horizontal axis represents the position (angle) $\theta$ in the horizontal direction (H line direction). A light distribution 800 shown in Fig. 13A includes an undimmed portion 802 and dimmed portion 804. The dimmed portion 804 has a dimming ratio of 50%. The upper graph in Fig. 13B is an enlargement showing a region in the vicinity of the dimmed portion 804. The lower graph in Fig. 13B shows the time waveform of the duty cycle of PWM dimming that corresponds to the upper graph. By making a combination of the scanning and PWM dimming, such an arrangement generates a region (transition region) 806 in which the light intensity gradually changes as a boundary region between the dimmed portion 804 and the undimmed portion 802. The transition region 806 has a width that is equal to that of the instantaneous illumination spot.

As the width of the dimmed portion 804 becomes narrower, the ratio of the transition region 806 becomes larger with respect to the dimmed portion 804, leading to degradation of the effective resolution (first problem). Also, in a case in which the light intensity distribution of the instantaneous illumination spot has a rectangular shape or a shape similar to a rectangular shape in the horizontal direction, as shown in Fig. 13B, the light intensity changes in a stepwise manner in the transition region 806 (second problem). It should be noted that description will be made assuming that the instantaneous illumination spot is scanned in the right-side direction, and its front edge (leading edge, i.e., right end) is positioned at a position θ at each time point t.

Description will be made below regarding dimming control (which will be referred to as turn-off cycle number control or simply as cycle number control) that is capable of solving at least one of the first problem and the second problem.

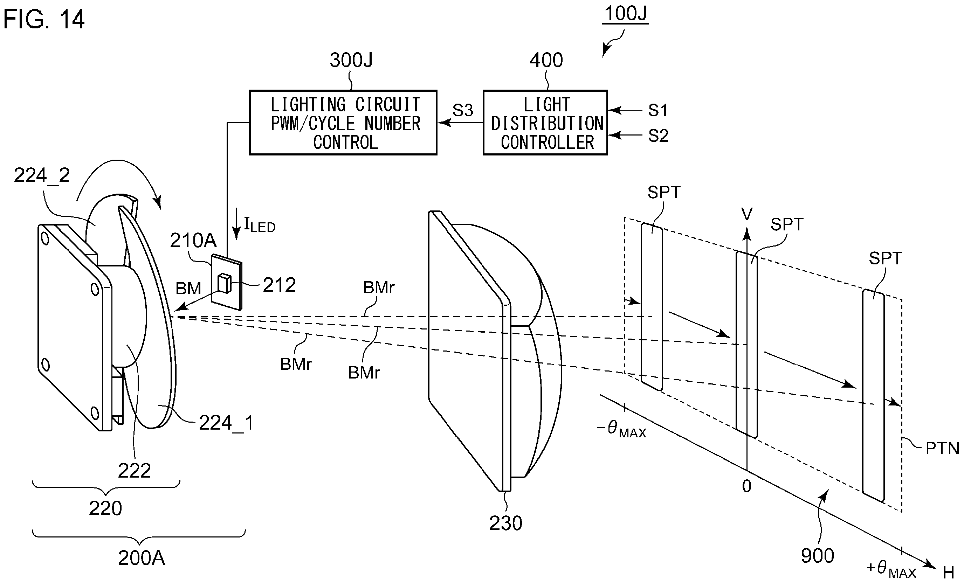

Fig. 14 is a block diagram of an automotive lamp 100J according to an embodiment 3. The automotive lamp 100J has the same basic configuration as that described above. In the present embodiment, the lighting circuit 300J is switchable between two modes (control methods). The first mode is also referred to as the PWM mode (duty control). As described above, the semiconductor light source is controlled by pulse dimming modulation with a duty cycle that corresponds to the dimming ratio.

The second mode is referred to as a "cycle number control mode". In the second mode, the semiconductor light source 212 is turned off over the number of cycles (number of periods) of the PWM control according to the dimming ratio (and width of the shielded region).

The above is the configuration of the automotive lamp 100J. Next, description will be made regarding the operation thereof. First, description will be made regarding the first mode (PWM mode). The PWM mode is provided as described above. As shown in Fig. 13B, the transition region 806 is designed to have a long length. Furthermore, in the transition region 806, the light intensity changes in a stepwise manner.

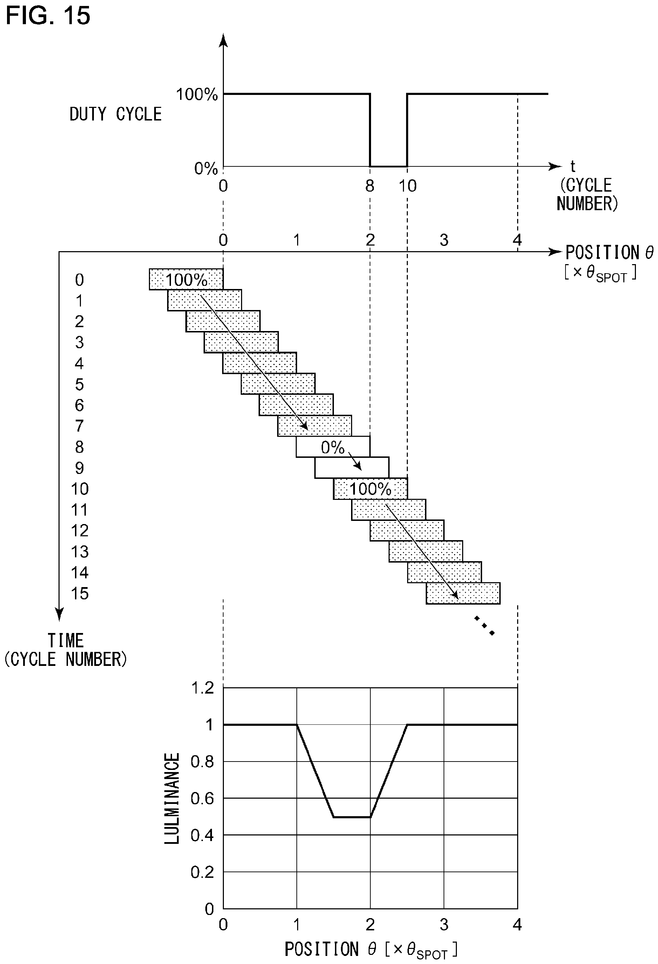

Fig. 15 is a diagram for explaining the operation of the cycle number control (second mode) of the automotive lamp 100J shown in Fig. 14. Here, description will be made regarding a case in which the light source is turned off over two cycles of the PWM period in the scanning with a duty cycle of 100%. Description will be made assuming that the instantaneous illumination spot SPT has a width of $\theta_{SPOT}$, and the instantaneous illumination spot SPT is moved by $0.25 \times \theta_{SPOT}$ in each PWM period. In other words, the instantaneous illumination spot moves by its width, i.e., $\theta_{SPOT}$, in four cycles of PWM.

The time t is normalized by the PWM period. Description will be made with the coordinate point of the leading edge of the instantaneous illumination spot SPT at the time point t = 0 as θ = 0. The position of the light distribution on the horizontal axis is normalized by the spot width $\theta_{SPOT}$.

During the first cycle and the seven subsequent cycles (t = 0 to 8), the duty cycle is set to 100%. During the two subsequent cycles (t = 8 to 10), the duty cycle is set to 0%. After the tenth cycle (t > 10), the duty cycle is returned to 100%. The number of cycles in which the duty cycle is set to 0% will be referred to as the number of off cycles.

As a result of this control, a dimmed region can be formed with a dimming ratio of 50% in a range of θ = 1.5 to 2.

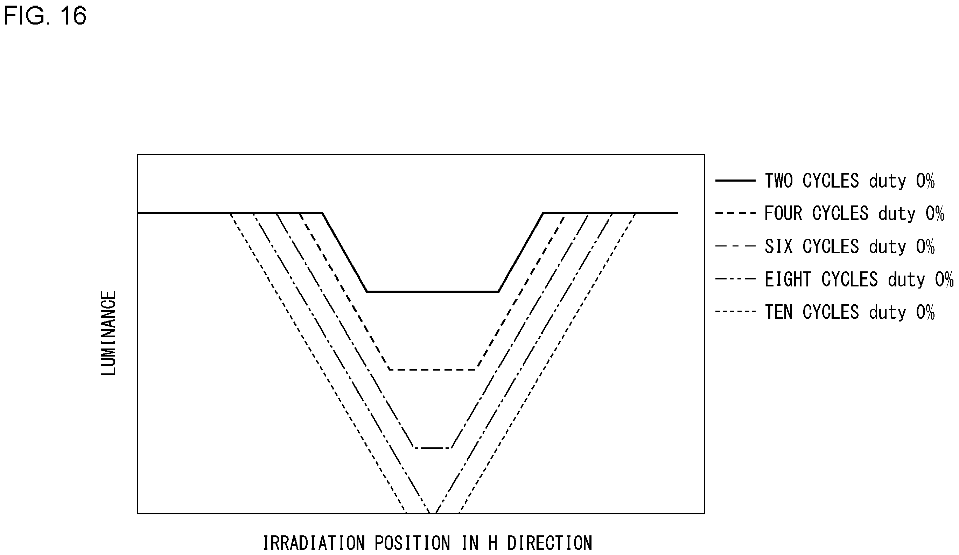

Fig. 16 is a diagram showing the light distribution formed by the cycle number control of the automotive lamp 100J shown in Fig. 14. Here, description will be made assuming that the instantaneous illumination spot has a width of 0.93 degrees, the PWM frequency is set to 20 kHz, and the instantaneous illumination spot moves by a distance of 0.12 degrees in each PWM period (each cycle). Fig. 16 shows the light distributions in a case in which the light source is turned off (duty cycle = 0%) over two, four, six, eight, and ten consecutive cycles.

In a case in which the number of turn-off cycles is increased to 2, 4, 6, 8, and 10, this is capable of providing the dimmed region with a reduced dimming ratio. Furthermore, the light intensity that occurs in the transition region 806 has a continuous slope. That is to say, such an arrangement suppresses the occurrence of a stepwise change in the PWM mode.

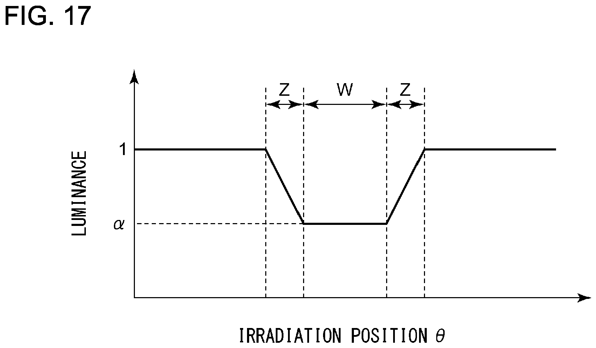

Fig. 17 is a diagram showing a relation between the number of off cycles in the cycle number control and the light distribution pattern. Description will be made with the number of cycles required for the instantaneous illumination spot SPOT moving by its width $\theta_{SPOT}$ as X, and with the number of cycles in which the instantaneous illumination spot is turned off as Y. In this case, the dimming ratio α, the width W of the dimmed region, and the width Z of the transition region on one side, can be generalized as follows.

$$\alpha = (X - Y)/Z$$

$$W = (X - Y)/X \times \theta_{SPOT} = \alpha \times \theta_{SPOT}$$

$$Z = (1 - \alpha) \times \theta_{SPOT}$$

That is to say, it can be said that the cycle number control is preferably employed for the light distribution formation in a case in which the width W of the dimmed region is narrower than a predetermined value, e.g., the width $\theta_{SPOT}$ of the instantaneous illumination spot. Accordingly, in a case in which the width of the dimmed region is narrower than a predetermined value, the lighting circuit 300J may preferably select the cycle number control. In contrast, in a case in which the width of the dimmed region is larger than a predetermined value, the lighting circuit 300J may preferably select the PWM control.

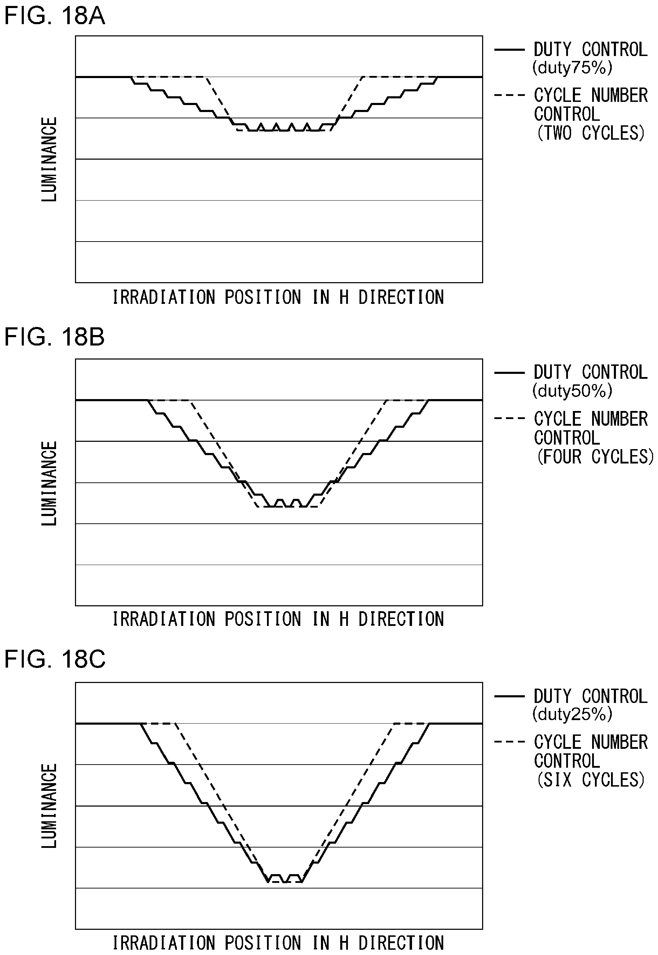

Figs. 18A through 18C are diagrams each showing the light distribution provided by the cycle number control and the light distribution provided by the PWM control. Figs. 18A through 18C show dimmed regions with dimming ratios of 75%, 50%, and 25%. Comparing the cycle number control and the PWM control, assuming that the respective dimmed regions have the same width and the same dimming ratio, the cycle number control has an advantage of providing the transition region with a width that is smaller than that provided by the PWM control.

The above-described embodiments have been described for exemplary purposes only. Rather, it can be readily conceived by those skilled in this art that various modifications may be made by making various combinations of the aforementioned components or processes, which are also encompassed in the technical scope of the present invention. Description will be made below regarding such modifications.

[INDUSTRIAL APPLICABILITY]

The present disclosure relates to an automotive lamp.

[DESCRIPTION OF THE REFERENCE NUMERALS]

S1 sensor information, S2 vehicle information, S3 light distribution pattern information, S4 position detection signal, PWM_DIM pulse dimming signal, 100 automotive lamp, 200 scanning light source, 210 light source unit, 212 semiconductor light source, 220 scanning optical system, 222 motor, 224 blade mirror, 230 projection optical system, 300 lighting circuit, 302 position detector, 310 PWM signal generating unit, 320 LED driver, 400 light distribution controller, 900 virtual vertical screen.

**Claims**

1. An automotive lamp comprising:

   a scanning light source comprising a semiconductor light source, and structured to scan an instantaneous illumination spot based on an output light of the semiconductor light source in a horizontal direction; and
   a lighting circuit structured to provide multi-gradation dimming of an amount of light of the semiconductor light source at each scanning position in synchronization with scanning of the scanning light source,
   wherein the lighting circuit is switchable between a first mode in which the semiconductor light source is controlled by pulse width modulation with a duty cycle that corresponds to a dimming ratio and a second mode in which the semiconductor light source is turned off over a number of cycles that corresponds to the dimming ratio.

2. The automotive lamp according to claim 1, wherein, in a case in which a dimmed region has a width that is narrower than a predetermined value, the second mode is selected.

3. The automotive lamp according to claim 1 or 2, wherein, in addition to the semiconductor light source, the scanning light source further comprises a reflector structured to receive the output light of the semiconductor light source and to repeat a predetermined periodic motion so as to scan a reflected light of the output light in front of a vehicle, and wherein the lighting circuit generates a control waveform for pulse width modulation in synchronization with the motion of the reflector, and switches on and off a driving current to be supplied to the semiconductor light source according to the control waveform.

4. An illumination method comprising:

   scanning an instantaneous illumination spot based on an output light of a semiconductor light source in a horizontal direction of a light distribution; and
   providing multi-gradation dimming of an amount of light of the semiconductor light source at each scanning position in synchronization with scanning of the instantaneous illumination spot,
   wherein the dimming comprises:

   turning on the semiconductor light source by pulse width modulation with a duty cycle that corresponds to a dimming ratio in a case in which a dimmed region has a width that is wider than a predetermined value; and
   turning off the semiconductor light source over a number of cycles that corresponds to the dimming ratio in a case in which a dimmed region has a width that is narrower than the predetermined value.

FIG. 1

FIG. 2A

914    912    916    910

LUMINANCE

$-\theta_{MAX}$    $+\theta_{MAX}$    H

FIG. 2B

PWM DIMMING
DUTY CYCLE

100%

0%    t

$I_{LED}$

0A    t

FIG. 3A

FIG. 3B

FIG. 4A

FIG. 4B

LUMINANCE

$-\theta_{MAX}$   0   $+\theta_{MAX}$   H

PWM DIMMING DUTY CYCLE   100%   0%

$-\theta_{MAX}$   0   $+\theta_{MAX}$   H   t

$I_{LED}$   0A   t

LUMINANCE

$-\theta_{MAX}$   0   $+\theta_{MAX}$   H

PWM DIMMING DUTY CYCLE   100%   0%

$-\theta_{MAX}$   0   $+\theta_{MAX}$   H   t

$I_{LED}$   0A   t

16

FIG. 5

COMPARISON TECHNIQUE

100R

300R

LIGHTING
CIRCUIT
(DC DIMMING)

$I_{LED1} \sim I_{LEDN}$

224_2

210   212_1
      212_2
      ⋮
      212_N

$BM_N$

224_1

222

220

$BMr_1$

230

$PTN_1$  $PTN_2$  V

$PTN_N$

$-\theta_{MAX}$

0

900

$+\theta_{MAX}$  H

# FIG. 6

COMPARISON TECHNIQUE

FIG. 7

## FIG. 8

FIG. 9

FIG. 10

FIG. 11

FIG. 12

EP 4 265 476 A1

FIG. 13A

800

802    804    802

LUMINANCE

ENLARGEMENT

IRRADIATION POSITION IN H DIRECTION
$\theta$

FIG. 13B

DUTY CONTROL
(duty50%)

LUMINANCE

802    806    804    806    802

IRRADIATION POSITION IN H DIRECTION
$\theta$

LE

SPT($t_0$)

100%

DUTY
CYCLE

50%

t

$t_0$              $t_1$              $t_2$

FIG. 14

FIG. 15

FIG. 16

FIG. 17

IRRADIATION POSITION θ

## FIG. 18A

LUMINANCE

IRRADIATION POSITION IN H DIRECTION

—— DUTY CONTROL (duty75%)

--- CYCLE NUMBER CONTROL (TWO CYCLES)

## FIG. 18B

LUMINANCE

IRRADIATION POSITION IN H DIRECTION

—— DUTY CONTROL (duty50%)

--- CYCLE NUMBER CONTROL (FOUR CYCLES)

## FIG. 18C

LUMINANCE

IRRADIATION POSITION IN H DIRECTION

—— DUTY CONTROL (duty25%)

--- CYCLE NUMBER CONTROL (SIX CYCLES)

**EP 4 265 476 A1**

| INTERNATIONAL SEARCH REPORT | International application No. |
|---|---|
| | **PCT/JP2021/046328** |

**A. CLASSIFICATION OF SUBJECT MATTER**

***B60Q 1/04***(2006.01)i; ***B60Q 1/14***(2006.01)i; ***F21V 23/00***(2015.01)i; *F21Y 115/10*(2016.01)n; *F21Y 115/30*(2016.01)n; ***F21V 14/04***(2006.01)i; ***F21S 41/151***(2018.01)i; ***F21S 41/16***(2018.01)i; ***F21S 41/675***(2018.01)i; *F21W 102/14*(2018.01)n; ***H05B 47/105***(2020.01)i; ***H05B 47/125***(2020.01)i; ***H05B 47/155***(2020.01)i; ***H05B 47/165***(2020.01)i; ***H05B 47/17***(2020.01)i; ***H05B 47/175***(2020.01)i; ***H05B 45/10***(2020.01)i; ***H05B 45/33***(2020.01)i; ***H05B 45/375***(2020.01)i

FI: H05B45/33; B60Q1/04 E; B60Q1/14 Z; F21S41/151; F21S41/16; F21S41/675; F21V14/04; F21V23/00 140; H05B45/10; H05B45/375; H05B47/105; H05B47/125; H05B47/155; H05B47/165; H05B47/17; H05B47/175; F21W102:14; F21Y115:10; F21Y115:30

According to International Patent Classification (IPC) or to both national classification and IPC

**B. FIELDS SEARCHED**

Minimum documentation searched (classification system followed by classification symbols)

H05B 39/00-39/10, 45/00-45/58, 47/00-47/29, B60Q 1/00-1/56, F21K 9/00-9/90, F21S 2/00-45/70, F21V 1/00-15/04, 23/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-209002 A (KOITO MFG CO LTD) 24 November 2015 (2015-11-24) entire text, all drawings | 1-4 |
| A | JP 2017-45592 A (NEW JAPAN RADIO CO LTD) 02 March 2017 (2017-03-02) entire text, all drawings | 1-4 |
| A | JP 2008-305759 A (ROHM CO LTD) 18 December 2008 (2008-12-18) entire text, all drawings | 1-4 |
| A | JP 2014-63092 A (SEIKO EPSON CORP) 10 April 2014 (2014-04-10) entire text, all drawings | 1-4 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2022** | **01 March 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

30

## INTERNATIONAL SEARCH REPORT
### Information on patent family members

International application No.

**PCT/JP2021/046328**

| Patent document cited in search report | | | Publication date (day/month/year) | Patent family member(s) | | | Publication date (day/month/year) |
|---|---|---|---|---|---|---|---|
| JP | 2015-209002 | A | 24 November 2015 | US | 2015/0307018 | A1 | |
| | | | | entire text, all drawings | | | |
| | | | | DE | 102015207432 | A1 | |
| | | | | FR | 3020327 | A1 | |
| | | | | CN | 105042464 | A | |
| JP | 2017-45592 | A | 02 March 2017 | (Family: none) | | | |
| JP | 2008-305759 | A | 18 December 2008 | US | 2010/0148703 | A1 | |
| | | | | entire text, all drawings | | | |
| | | | | WO | 2008/108468 | A1 | |
| | | | | CN | 101658071 | A | |
| JP | 2014-63092 | A | 10 April 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008205357 A
- JP 2012224317 A
- JP 2010006109 A
- JP 2018187979 A